Europäisches Patentamt

European Patent Office

Office européen des brevets

(11) Veröffentlichungsnummer: **0 183 911 B1**

# EUROPÄISCHE PATENTSCHRIFT

(45) Veröffentlichungstag der Patentschrift: 07.08.91

(51) Int. Cl.⁵: **H04R 3/12, H04B 1/20**

(21) Anmeldenummer: 85109111.6

(22) Anmeldetag: 20.07.85

(54) **Rundfunkgerät, Rundfunkgerät mit Cassettengerät oder Cassettengerät.**

(30) Priorität: 29.11.84 DE 3443489

(43) Veröffentlichungstag der Anmeldung:
11.06.86 Patentblatt 86/24

(45) Bekanntmachung des Hinweises auf die
Patenterteilung:
07.08.91 Patentblatt 91/32

(84) Benannte Vertragsstaaten:
CH DE FR IT LI

(56) Entgegenhaltungen:
DE-A- 3 326 887
DE-B- 1 252 746

FUNKSCHAU, Band 45, Heft 18, 31. August
1973, Seiten 694-696, München, DE; G.W.
HAEDER et al.: "Die aktive Lautsprecherbox"

GRUNDIG TECHNISCHE INFORMATIONEN,
Heft 5/6, 1981, Seiten 310-313, Furth, DE; H.
SINNING: "Der Vierfach-Auto-Booster PA 80
Hifi von Grundig"

(73) Patentinhaber: GRUNDIG E.M.V. Elektro-
Mechanische Versuchsanstalt Max Grundig
holländ. Stiftung & Co. KG.
Kurgartenstrasse 37
W-8510 Fürth/Bay.(DE)

(72) Erfinder: Fischelmayer, Heinrich
Siebenbürgener Strasse 13
W-8502 Zirndorf(DE)

## Beschreibung

Die Erfindung betrifft ein Rundfunkgerät, Rundfunkgerät mit Cassettengerät oder Cassettengerät der im Oberbegriff des Anspruchs 1 angegebenen Art.

Rundfunkgeräte, Rundfunkgeräte mit Cassettengeräten oder Cassettengeräte mit vorzugsweise mehrkanaligen, von Gleichspannungsquellen gespeisten NF-Leistungsendstufen, deren Ausgangssignale jeweils über Kondensatoren an die für den Anschluß fernsteuerbarer hochohmiger Lasten oder nicht fernsteuerbarer niederohmiger Lasten vorgesehenen Ausgänge angelegt werden, sind grundsätzlich bekannt.

Ferner ist es bekannt, an den Last- (Lautsprecher-) anschlüssen von Autorundfunk- oder -cassettengeräten zur Verbesserung des Klangeindrucks und vor allem zur Steigerung der verfügbaren NF-Ausgangsleistung separate Zusatzendstufen (Booster) oder aktive Lautsprechersysteme (Lautsprecherboxen mit integrierten separaten Leistungsendstufen) zu betreiben. Aus Gründen des Bedienungskomforts sind bei derartigen Zusatzkomponenten Schalteingänge vorgesehen, die in Verbindung mit dem Automatik-Antennenanschluß des Autorundfunkgerätes ein fernbedienbares Ein- oder Abschalten der betreffenden Zusatzkomponenten erlauben (GRUNDIG Technische Informationen, 5/6-1981, Seiten 310 bis 313).

Der Nachteil der bekannten Art, die Betriebsbereitschaft separater Zusatzkomponenten über das Autorundfunkgerät, insbesondere dessen Automatik-Antennenanschluß, zu steuern, besteht im wesentlichen darin, daß zur Übertragung des Steuersignals eine separate Leitung erforderlich ist. Der ohnehin sehr hohe Verkabelungsaufwand im Kraftfahrzeug wird damit noch erhöht.

Es ist zwar auch ein Verfahren bekannt, nach dem die Betriebsbereitschaft einer bestimmten Zusatzkomponente durch das zu ihr übertragene NF-Signal gesteuert wird, wodurch eine separate Steuerleitung entfallen kann. Jedoch ist in diesem Falle der bei der Zusatzkomponente erforderliche schaltungstechnische Aufwand zur Erkennung eines eintreffenden oder ausbleibenden NF-Signals sowie zur Erzeugung eines damit verbundenen Schaltsignals groß. Außerdem ist die Festlegung der hierbei erforderlichen Schaltschwellen und Zeitkonstanten zum Auslösen eines Schaltvorgangs im Hinblick auf mögliche Störsignale, z. B. starke Funksignale oder in Versorgungsleitungen auftretende Störimpulse, nicht unkritisch.

Ein weiteres Beispiel dafür ist in dem Dokument DE-1252 746 offenbart, in welchem der Betriebsgleichstrom der Verstärkerschaltung in der Ausgangsstufe zusammen mit der Niederfrequenz über eine zweipolige Leitung zu der Lautsprechereinheiten geführt wird. Der o.g. Betriebsgleichstrom, welchen durch die in der lautsprechereinheiten liegenden Arbeitswiderstände fließt, wirkt direkt oder indirekt als Netz eingangsschaltung der Lautsprechereinheiten.

Der Erfindung liegt die Aufgabe zugrunde, ein Rundfunkgerät, Rundfunkgerät mit Cassettengerät oder Cassettengerät der im Oberbegriff des Anspruchs 1 angegebenen Art so auszubilden, daß zur sicheren Fernsteuerung von daran angeschlossenen Zusatzkomponenten mittels geeigneter Schaltbefehle weder zusätzliche Leitungen zur Übertragung der Befehle, noch aufwendige Schaltmittel zur Erkennung der Befehle erforderlich sind.

Diese Aufgabe wird durch die im kennzeichnenden Teil des Patentanspruchs 1 angegebenen Merkmale gelöst. Vorteilhafte Weiterbildungen der Erfindung sind in den Unteransprüchen gekennzeichnet.

Ein Rundfunkgerät, Rundfunkgerät mit Cassettengerät oder Cassettengerät gemäß der Erfindung eignet sich besonders als Steuergerät für nachgeschaltete Zusatzendstufen (Booster) oder aktive Lautsprechersysteme, die einen mit dem NF-Eingang verbundenen oder verbindbaren Schalteingang zur gleichspannungsgesteuerten Zu- oder Abschaltung der Betriebsspannung besitzen. Es bietet die Möglichkeit Schalt- und NF-Signale über jeweils eine Leitung zu dem betreffenden Zusatzgerät zu übertragen, da an seinen NF-Ausgängen bei ausreichend hochohmigen Lasten neben den NE-Signalen in vorteilhafter Weise auch Schaltsignale in Form von Gleichspannungspegeln abgreifbar sind. Die betreffenden Gleichspannungspegel entstehen jeweils infolge einer hochohmigen Spannungteilung der bekanntlich vor den Auskoppelkondensatoren der Endstufen anliegenden halben Betriebsspannungen und/oder der zur Versorgung des Gerätes dienenden Betriebsspannung selbst. Damit ist es in besonders einfacher Weise möglich, durch unterschiedliche Gleichspannungspegel entweder Schaltbefehle zu erzeugen, auf die z. B. nur ganz bestimmte Zusatzkomponenten mit einer entsprechend niedrigen Schaltschwelle ansprechen, oder solche, mit denen auch Zusatzkomponenten mit höheren Schaltschwellen aktiviert werden.

Ein Ausführungsbeispiel der Erfindung ist im folgenden anhand einer Zeichnung näher erläutert.

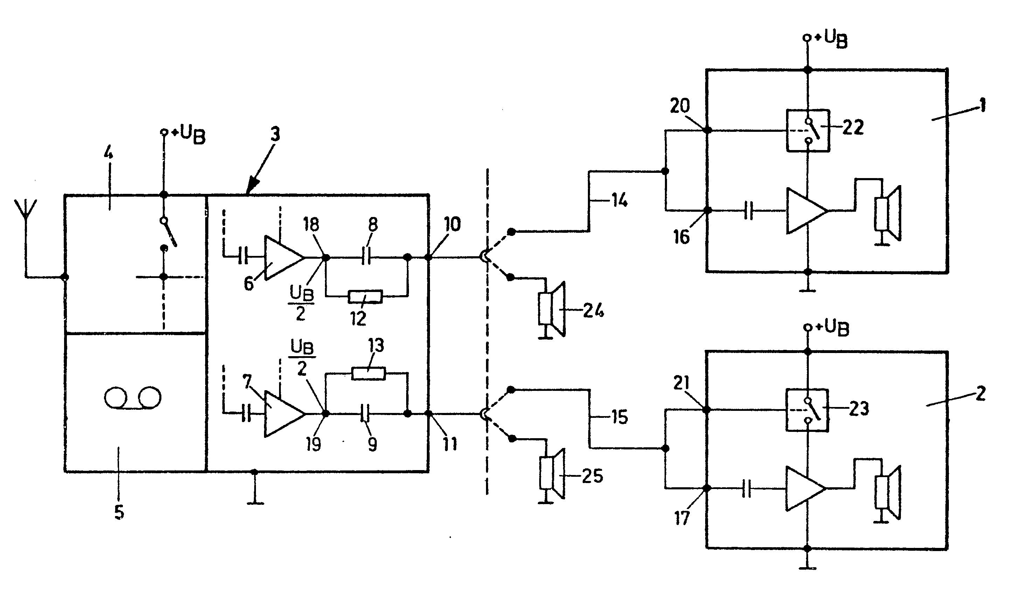

Die Figur zeigt zwei aktive und zwei passive Lautsprechersysteme 1 und 2 bzw. 24 und 25, die wahlweise von einem kombinierten Rundfunk- und Cassettengerät 3 gemäß der Erfindung angesteuert werden.

Bei dem dargestellten kombinierten Rundfunk- und Cassettengerät 3, bestehend aus einem Rundfunktuner 4, einem Cassettenteil 5 sowie einer Stereoendstufe 6, 7, werden die an den Verstärkerausgängen 18 und 19 abgreifbaren NF-Signale über zwei Kondensatoren 8, 9 an die für den Anschluß zweier fernsteuerbarer hochohmiger oder zweier nicht fernsteuerbarer niederohmiger Lasten 1, 2 bzw. 24, 25 vorgesehenen Ausgänge 10, 11 angelegt. Hierbei sind die Kondensatoren 8, 9 gemäß der Erfindung jeweils mit einem ohmschen Widerstand 12 bzw. 13 überbrückt, der im Vergleich zum Gleichstromwiderstand der niederohmigen Last 24 bzw. 25 hochohmig ist. Von den Lastanschlüssen 10, 11 führt jeweils eine Leitung 14 bzw. 15 zu den NF-Eingängen 16, 17 der fernzusteuernden aktiven Lautsprechersysteme 1 und 2. Die NF-Eingänge 16 und 17 der beiden aktiven Lautsprechersysteme sind jeweils mit ihren zugehörigen Schalteingängen 20 bzw. 21 für die An- oder Abschaltung der Betriebsspannung verbunden. Über die Schalteingänge 20 und 21 werden beispielsweise elektronische Schalter 22 und 23 gesteuert, die bei Anliegen eines bestimmten Gleichspannungspegels die aktiven Lautsprecherendstufen an die Betriebsspannung $U_B$ legen.

Bei eingeschaltetem Gerät liegt an den Ausgängen 18 bzw. 19 der beiden Endstufen 6 und 7 jeweils ein Gleichspannungspegel in Höhe der halben Betriebsspannung $U_B$. Für den Anschluß passiver, niederohmiger Lautsprechersysteme 24 und 25 ist es erforderlich, diese Gleichspannungspegel in an sich bekannter Weise durch Kondensatoren 8, 9 abzublocken, um eine Zerstörung der Lautsprechersysteme durch unzulässig hohe Gleichströme zu vermeiden. Diese Schutzwirkung der Kondensatoren 8, 9 für niederohmige Lautsprechersysteme bleibt durch die parallel liegenden hochohmigen Widerstände 12 und 13 gemäß der Erfindung erhalten. Die an einem passiven Lautsprechersystem 24 und 25 jeweils abfallende Gleichspannung ist aufgrund der sehr hohen Teilungsverhältnisse der hochohmigen Widerstände 12 und 13 zu den niederohmigen Schwingspulenwiderständen der Lautsprecher 24 bzw. 25 praktisch gleich Null und der sich ergebende Gleichstrom vernachlässigbar klein. Die Parallelwiderstände 12, 13 bleiben also für diesen Betriebsfall ohne Bedeutung. Wird dagegen an den Lastanschlüssen 10 und 11 des Rundfunk- und Cassettengeräts 3 anstelle eines passiven, niederohmigen Lautsprechersystems 24, 25 das in der Figur dargestellte aktive, als hochohmige Last wirkende System 1 und 2 betrieben, dann bildet sich aufgrund der wesentlich kleineren Teilungsverhältnisse der hochohmigen Widerstände 12 und 13 zu den gleichfalls hochohmigen NF- bzw. Schalteingängen 16, 17 bzw. 20, 21 der aktiven Lautsprechersysteme 1 und 2 an den Lastanschlüssen 10 und 11 jeweils ein Gleichspannungspegel aus, der ausreicht, um die elektronischen Betriebsspannungsschalter 22 und 23 der aktiven Lautsprechersysteme 1 und 2 zu schließen.

Sind an die Lastanschlüsse 10 und 11 des Rundfunk- und Cassettengeräts 3 außer den aktiven Lautsprechersystemen 1 und 2 noch weitere fernsteuerbare hochohmige Zusatzkomponenten angeschlossen, die wahlweise mit den Lautsprechersystemen 1 und 2 betrieben werden sollen oder nicht, dann müssen deren steuerbaren Betriebsspannungsschalter höhere Gleichspannungsschwellwerte aufweisen als die der Lautsprechersysteme 1 und 2. Zu ihrer Aktivierung über die Leitungen 14 und 15 müssen dann entsprechend höhere Gleichspannungspegel hochohmig an die Lastanschlüsse 10 und 11 gelegt werden. Dies erfolgt in vorteilhafter Weise durch zuschaltbare hochohmige Widerstände zwischen den Lastanschlüssen 10 bzw. 11 und der Betriebsspannung $U_B$. Die Wirkung dieser Widerstände ist prinzipiell die gleiche wie die der hochohmigen Widerstände 12 und 13.

## Patentansprüche

1. Rundfunkgerät, Rundfunkgerät mit Cassettengerät oder Cassettengerät mit einer vorzugsweise mehrkanaligen, von einer Gleichspannungsquelle gespeisten NF-Leistungsendstufe, deren Ausgangssignale jeweils über Kondensatoren an die für den Anschluß fernsteuerbarer hochohmiger Lasten oder nicht fernsteuerbarer niederohmiger Lasten vorgesehenen Ausgänge angelegt werden, **dadurch gekennzeichnet,** daß zwischen den Lastanschlüssen (10, 11) und im Gerät vorhandenen Gleichspannungsquellen (18, 19; $U_B$) ohmsche Widerstände (12, 13) als Gleichstrompfade vorgesehen sind, die jeweils im Vergleich zu den Gleichstromwiderständen der niederohmigen Lasten (24, 25) hochohmig sind, und die nur beim Anschluß hochohmiger Lasten (1, 2) zur Auskopplung von Gleichspannungsschaltsignalen für eine Fernsteuerung (Schalter 22, 23) dieser hochohmigen Lasten dienen.

2. Rundfunkgerät, Rundfunkgerät mit Cassettengerät oder Cassettengerät nach Anspruch 1, **dadurch gekennzeichnet,** daß als Gleichspannungsquellen die an den Verstärkerausgängen (18, 19) auftretenden Gleichspannungen dienen.

3. Rundfunkgerät, Rundfunkgerät mit Casetengerät oder Cassettengerät nach Anspruch 1, **dadurch gekennzeichnet,** daß als Gleichspannungsquellen die zur Speisung verwendete Gleichspannung ($U_B$) selbst oder von ihr über Spannungsteiler abgeleitete Teilspannungen dienen.

## Claims

1. Radio set, radio set with cassette unit or cassette unit comprising a preferably multi-channel AF power output stage which is fed by a direct-voltage source and the output signals of which are in each case applied via capacitors to the outputs provided for connecting remote-controllable high-impedance loads or non-remote-controllable low-impedance loads, characterised in that between the load connections (10, 11) and direct-voltage sources (18, 19; $U_B$) existing in the set, ohmic resistors (12, 13) are provided as direct-current paths which in each case have a high impedance in comparison with the direct-current resistances of the low-impedance loads (24, 25) and which are only used for coupling out direct-voltage switching signals for a remote control (switches 22, 23) of high-impedance loads when these high-impedance loads (1, 2) are connected.

2. Radio set, radio set with cassette unit or cassette unit according to Claim 1, characterised in that the direct voltages occurring at the amplifier outputs (18, 19) are used as the direct-voltage sources.

3. Radio set, radio set with cassette unit or cassette unit according to Claim 1, characterised in that the direct voltage ($U_B$) itself, which is used for feeding, or part-voltages derived from it via voltage dividers are used as the direct-voltage sources.

**Revendications**

1. Récepteur radio, récepteur radio comportant un appareil à cassette ou appareil à cassette comportant un étage final de puissance basse fréquence de préférence à plusieurs canaux, alimenté par une source de tension constante et dont les signaux de sortie sont envoyés, respectivement par l'intermédiaire de condensateurs, aux charges de forte valeur ohmique, pouvant être télécommandées pour le raccordement, ou à des charges de faible valeur ohmique ne pouvant pas être télécommandées, caractérisé en ce qu'entre les bornes (10,11) de charge et les sources de tension continue (18,19; $U_B$) présentes dans l'appareil, il est prévu en tant que voies à courant continu, des résistances ohmiques (12,13), qui possèdent une forte valeur ohmique respectivement par rapport aux résistances à courant continu des charges de faible valeur ohmique (24,25) et sont utilisées, uniquement lors du raccordement de charges de forte valeur ohmique (1,2), pour découpler des signaux de commutation à tension continue pour une télécommande (interrupteurs 22,23) de ces charges de forte valeur ohmique.

2. Récepteur radio, récepteur radio comportant un appareil à cassette ou appareil à cassette selon la revendication 1, caractérisé en ce qu'on utilise, comme source de tension continue, les tensions continues apparaissant sur les sorties (18,19) d'amplificateurs.

3. Récepteur radio, récepteur radio comportant un appareil à cassette ou appareil à cassette selon la revendication 1, caractérisé en ce qu'on utilise comme sources de tension continue, la tension continue ($U_B$) utilisée pour l'alimentation, elle-même, ou des tensions partielles dérivées de cette tension par l'intermédiaire de diviseurs de tension.